# EUROPEAN PATENT SPECIFICATION

(11) **EP 1 090 715 B1**
(45) Date of publication and mention of the grant of the patent: **14.04.2004**
(21) Application number: 00120207.6
(22) Date of filing: 25.09.2000
(51) Int. Cl.: B24B 9/10, B24B 41/06, B23Q 7/03

(54) **Cladding element for pads of plate conveyors in machines for machining edges**
Kleidungselement für Polster von Glasplattenförderer in Randbearbeitungsmaschinen
Elément de revêtement pour patins de convoyeur de plaques dans des machines d'usinage des bords

(30) Priority: 05.10.1999 IT MI990603 U
(43) Date of publication of application: 11.04.2001
(73) Proprietor: Z. BAVELLONI S.p.A., I-22070 Bregnano (Como) (IT)
(72) Inventor: Bavelloni, Franco, 22020 San Fermo Della Battaglia (Como) (IT)
(74) Representative: Modiano, Guido, Dr.-Ing.

(56) References cited:
- EP-A- 0 482 496

## Description

The present invention relates to a cladding element for pads of plate conveyors in machines for machining edges.

Conventional machines for machining the edges of plates, particularly glass plates, use conveyors which are designed to cause the advancement of the plate, which is kept edgeways, on the various machining heads for machining the edge.

The conveyor is constituted by a closed-loop abutment element and by an opposite closed-loop element, which can be arranged at different distances from the other closed-loop element, according to the thickness of the glass plate being machined.

The conveyors are normally constituted by a plurality of pads arranged side by side, so as to obtain a closed-loop element, and in particular in the closed-loop abutment element a thin cladding, generally made of flexible rubber, is placed on the pad, while the pad of the closed-loop element whose position can be varied normally has protrusions which allow to apply a certain pressure against the glass plate (see, for example, EP 0 482 496 A1).

Especially in the case of beveling, jets of cooling water are projected at the machining heads. When the plate is not present between the opposite closed-loop elements, said jets can easily escape upwards, raising problems, generally for anyone in the vicinity of the machine, and also because the liquid which is sprayed can be abrasive, since it contains glass powder.

The aim of the invention is to solve the above problem, by providing a cladding element which allows protection against the passage of the jets of water, especially in the portions between the closed-loop elements in the regions not affected by the glass plate or in any case between one glass plate and the next.

Within the scope of this aim, a particular object of the invention is to provide a cladding element which allows to provide automatic protection which requiring particular interventions.

Another object of the present invention is to provide a cladding element which, thanks to its particular constructive characteristics, is capable of giving the greatest assurances of reliability and safety in use.

Another object of the present invention is to provide a cladding element which can be easily obtained starting from commonly commercially available elements and materials and is also competitive from a merely economic point of view.

These and other objects which will become better apparent hereinafter are achieved by a cladding element for pads of plate conveyors in edge machining machines, according to the invention, comprising a body made of flexible material which can be superimposed on the front surface of a pad and has, on its active face, a plurality of protrusions for supporting the plate being machined, characterized in that it comprises, between said protrusions, a lip which protrudes beyond said protrusions in order to engage the front surface of a facing pad and can be arranged in the space delimited by said protrusions when said protrusions are engaged with the plate being machined.

Further characteristics and advantages will become better apparent from the detailed description of a cladding element for pads of plate conveyors in edge machining machines, illustrated only by way of non-limitative example in the accompanying drawings, wherein:
Figure 1 is a view of a cladding element with the pad applied to a plate;
Figure 2 is a view of a cladding element in the case in which there is no plate between the pads;
Figure 3 is a schematic perspective view of the cladding element.

With reference to the figures, the cladding element for pads of plate conveyors in edge machining machines, generally designated by the reference numeral 1, comprises a body 2 made of flexible material, advantageously rubber or the like, which is applied to the front surface of a pad, generally designated by the reference numeral 3, which is connected to identical pads arranged side by side in order to provide a closed-loop element forming the conveyor in cooperation with a closed-loop abutment element which is arranged opposite.

The cladding element has, on its active face, a plurality of protrusions 4 which substantial affect the entire surface of said pad and are preset so as to press against the plate 5 being machined.

The particularity of the invention consists in that between the protrusions 4 there is a lip 10 which is shaped like a drooping flap, affects the entire width of the pad and has a such a length as to be arranged, as shown in Figure 2, so that its free end is in contact with the cladding surface of the pad of the closed-loop abutment element.

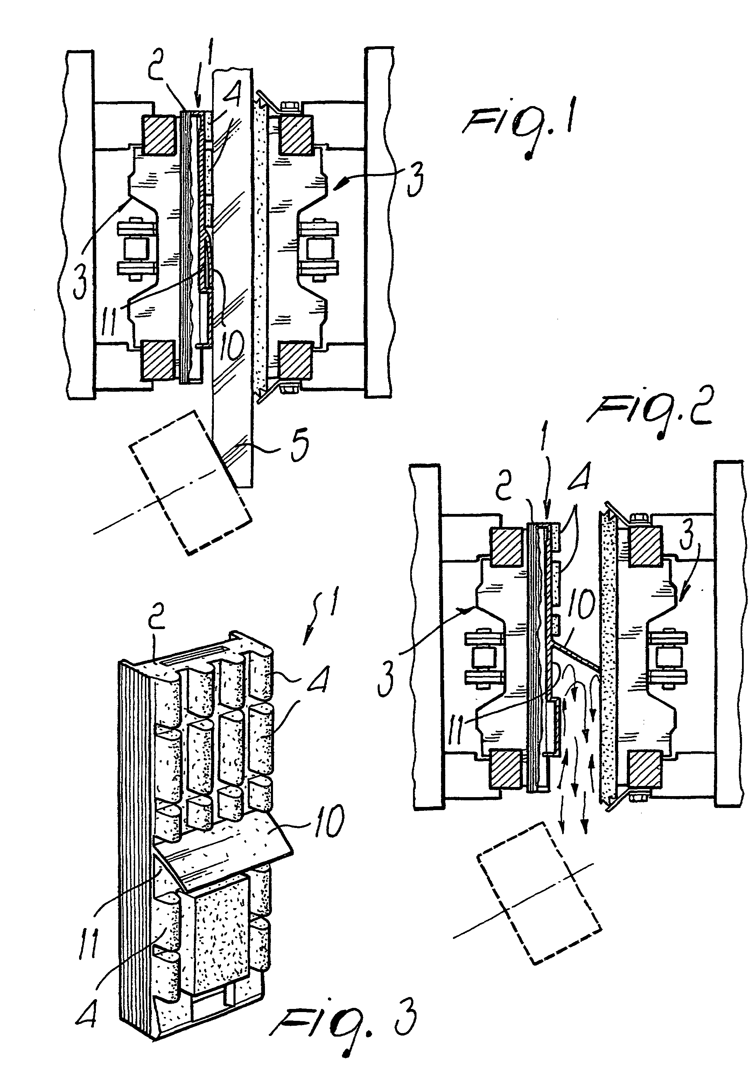

In this condition, even if a glass plate is not interposed, the jets of water encounter the barrier formed by the lip 10 and therefore they do not propagate upwardly. If instead there is a plate 5, as shown in Figure 1, the lip 10 is arranged in the space delimited by the protrusions, which in practice have a recess 11 allowing the lip to fold away freely.

With the above described arrangement, therefore, even when no glass plate is interposed between the pads, an excellent barrier to the upward propagation of the jets of water for cooling the machining heads is provided.

Furthermore, the provision of a lip with a drooping shape allows to achieve retraction by elastic deformation of said lip into the space delimited by the protrusions when the plate being machined is interposed.

In practice, the materials used, so long as they are compatible with the specific use, as well as the contingent shapes and dimensions, may be any according to requirements. Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cladding element for pads of plate conveyors in edge machining machines, comprising a body (2) made of flexible material, which can be superimposed on the front surface of a pad (3) and has, on its active face, a plurality of protrusions (4) for supporting the plate (5) being machined, **characterized in that** it comprises, between said protrusions (4), a lip (10) which protrudes beyond said protrusions (4) in order to engage the front surface of a facing pad (3), and is adapted to be arranged in the space (11) delimited by said protrusions when said protrusions (4) are engaged with the plate (5) being machined.

2. The cladding element according to claim 1, **characterized in that** said lip (10) is formed monolithically with said body (2).

3. The cladding element according to the preceding claims, **characterized in that** said lip (10) is shaped like a flap and is arranged so as to be tilted downwardly toward its free end.

4. The cladding element according to one or more of the preceding claims, **characterized in that** it comprises, between said protrusions (4), a recess (11) under the region where said lip (10) is attached in order to accommodate said lip (10) by elastic deformation.

## Patentansprüche

1. Verkleidungselement für Puffer an Plattenförderern bei Kantenbearbeitungsmaschinen, umfassend einen Körper (2) aus flexiblem Material, der an der Vorderseite eines Puffers (3) aufgelagert werden kann, und auf seiner aktiven Seite eine Mehrzahl von Vorsprüngen (4) aufweist, um die zu bearbeitende Platte (5) zu lagern, **dadurch gekennzeichnet, dass** es zwischen den Vorsprüngen (4) eine Lippe (10) aufweist, die über die Vorsprünge (4) hervorsteht, um an der Vorderseite eines zugewandten Puffers (3) einzugreifen, und zur Anordnung in einem Raum (11) geeignet ist, der von den Vorsprüngen begrenzt ist, wenn die Vorsprünge (4) an der zu bearbeitenden Platte (5) eingreifen.

2. Verkleidungselement nach Anspruch 1, **dadurch gekennzeichnet, dass** die Lippe (10) monolithisch mit dem Körper (2) ausgebildet ist.

3. Verkleidungselement nach dem vorhergehenden Ansprüche, **dadurch gekennzeichnet, dass** die Lippe (10) wie eine Klappe geformt ist und so angeordnet ist, dass sie zu ihrem freien Ende nach unten gekippt werden kann.

4. Verkleidungselement nach einem oder mehreren der vorhergehenden Ansprüche, **dadurch gekennzeichnet, dass** es zwischen den Vorsprüngen (4) eine Ausnehmung (11) aufweist, unter dem Bereich, wo die Lippe (10) angebracht ist, um die Lippe (10) durch elastische Deformation unterzubringen.

## Revendications

1. Elément de revêtement pour des patins de transporteurs de plaques dans des machines d'usinage de bords, comprenant un corps (2) réalisé en matière souple, qui peut être superposé sur la surface avant d'un patin (3) et a, sur sa face active, une pluralité de saillies (4) pour supporter la plaque (5) à usiner,
**caractérisé en ce qu'**il comprend, entre lesdites saillies (4), une lèvre (10) qui déborde au-delà desdites saillies de façon à engager la surface avant d'un patin en vis-à-vis (3), et est adaptée pour être agencée dans l'espace (11) délimité par lesdites saillies quand lesdites saillies (4) sont engagées avec la plaque (5) à usiner.

2. Elément de revêtement selon la revendication 1,
**caractérisé en ce que** ladite lèvre (10) est formée monolithiquement avec ledit corps (2).

3. Elément de revêtement selon les revendications précédentes,
**caractérisé en ce que** ladite lèvre (10) est conformée comme un rabat et est agencée de façon à s'incliner vers le bas du côté de son extrémité libre.

4. Elément de revêtement selon une ou plusieurs des revendications précédentes,
**caractérisé en ce qu'**il comprend, entre lesdites saillies (4), un évidement (11) sous la région où ladite lèvre (10) est fixée de façon à pouvoir recevoir ladite lèvre (10) par déformation élastique.
